# EUROPEAN PATENT APPLICATION

(11) **EP 4 254 715 A1**
(43) Date of publication of application: **04.10.2023**
(21) Application number: 22188177.4
(22) Date of filing: 01.08.2022
(51) Int. Cl.: H02J 7/00, H02J 7/34, E05B 81/86

(54) **METHOD AND SYSTEM FOR FAST CHARGING AT LEAST ONE SUPERCAPACITOR**

(30) Priority: 31.03.2022 DE 102022001106
(71) Applicant: Kiekert AG, 42579 Heiligenhaus (DE)
(72) Inventor: Merletti, Marco, 21010 Arsago Seprio (IT)
(74) Representative: Michalski Hüttermann & Partner Patentanwälte mbB

(57) **Abstract**

The invention relates to a method for fast charging at least one supercapacitor (2) of a vehicle door latch, whereby the at least one supercapacitor (2) is connected to a vehicle battery (3) via a current limiting element (5) and a switch (4) connected in series therewith, comprising the step of: pulse width modulating the switch (4) during charging such that a root mean square value of a charging current flowing through the at least one supercapacitor (2) multiplied by a charging voltage across the at least one supercapacitor (2) or a voltage across the current limiting element (5) is kept constant.

## Description

### Technical Field

The invention relates to a method for fast charging at least one supercapacitor of a vehicle door latch, whereby the at least one supercapacitor is connected to a vehicle battery via a limiting element and a switch connected in series. The invention further relates to a system for fast charging at least one supercapacitor of a vehicle door latch, comprising a vehicle battery and the vehicle door latch with the at least one supercapacitor, a limiting element and a switch connected in series to the vehicle battery and arranged in the vehicle door latch.

### Background Art

Several automotive systems require the presence in a vehicle of a backup energy source, to provide electrical energy in substitution, or as an aid to a main power supply of the vehicle, in case of failure or interruption of the same main power supply. Such backup power source is usually kept in a charged state during normal operation, by the main power supply of the vehicle, so as to be readily available as soon as the need arises, for example in case of an accident or crash of the vehicle.

US 2015/329009 A1 describes a backup energy source for an automotive system in a motor vehicle which is designed to receive a main supply voltage, during a normal operating condition, and to provide a backup supply voltage during a failure operating condition, different from the normal operating condition. The backup energy source has a control unit, and a supercapacitor group, operable by the control unit to store energy during the normal operating condition and to provide the backup supply voltage during the failure operating condition. A diagnostic module is coupled to the group of supercapacitors to provide the control unit with information concerning an operating status of the supercapacitor group.

Methods and systems for charging such supercapacitors are known from prior art, however, have the general drawbacks that a charging network charging the supercapacitor becomes hot during charging.

### Summary of invention

It is therefore an object of the invention to provide an easy and cheap solution for charging at least one supercapacitor of a vehicle door latch.

The object of the invention is solved by the features of the independent claims. Preferred implementations are detailed in the dependent claims.

Thus, the object is solved by a method for fast charging at least one supercapacitor of a vehicle door latch, whereby the at least one supercapacitor is connected to a vehicle battery via a limiting element and a switch connected in series, comprising the step of:
Pulse width modulating the switch during charging such that a root mean square of a charging current flowing through the at least one supercapacitor multiplied by a charging voltage dropping over the at least one supercapacitor, in particular over a stack of supercapacitors connected in series, or over the limiting element remains constant.

A key point of the invention is therefore that the supercapacitor can be charged in a very fast manner by using the proposed pulse width modulating for switching the switch, without a risk that a charging network charging the supercapacitor becomes hot during charging. Experiments have shown that, with two supercapacitors connected in series, fully discharged supercapacitors can be charged from 0 V to 4,5 V in 75 seconds by using a 12 V battery is typically present in vehicles. For partially discharged supercapacitors having 2 V charging can be achieved in only 40 seconds. In addition, the proposed solution is cheaper than other prior art charging solutions available. Finally, the proposed solution reduces or even avoids overheating and minimizes power losses of the at least one supercapacitor.

A supercapacitor, also referred to as super cap, SC, or called an ultracapacitor, is typically a high-capacity capacitor with a capacitance value much higher than other capacitors, but with lower voltage limits, that bridges the gap between electrolytic capacitors and rechargeable batteries. The supercapacitor typically stores 10 to 100 times more energy per unit volume or mass than electrolytic capacitors, can accept and deliver charge much faster than batteries, and tolerates many more charge and discharge cycles than rechargeable batteries.

The supercapacitor comprises, when fully charged, for example the voltage of 2,45 V. Preferably, at least two, two, three or four supercapacitors are connected in series. The vehicle battery preferably comprises a voltage of 12 V. The limiting element is preferably provided as resistance. The vehicle door latch is preferably the dull edge of side door or a back door of the vehicle. The vehicle be provided as electrical vehicle. The switch may be provided as MOSFET or any other semiconductor switch known from prior art. The at least one supercapacitor, the limiting element and the switch are preferably arranged within the vehicle door latch.

Pulse width modulating the switch means preferably that the switch is switched based on pulse width modulated signals. Pulse-width modulation, PWM, or pulse-duration modulation, PDM, is generally understood as a method of reducing an average power delivered by an electrical signal, by effectively chopping the signal up into discrete parts. An average value of voltage, and current, fed to the at least one supercapacitor as a load is usually controlled by turning the switch between supply and load on and off at a fast rate. The longer the switch is on compared to the off periods, the higher the total power supplied to the at least one supercapacitor.

The product respectively multiplication of charging voltage and charging current as power may sum up to 30, 40, 50 or 60 W. The root mean square is preferably calculated over 15, 30 or 60 seconds. The term constant means preferably that the root mean square of the charging current and the charging voltage varies by 0, 2,5 or 5% maximum during charging.

The method can be applied to any vehicle, for example a car, an electrically power car, a van or any vehicle known from prior art. The vehicle battery is thus intended to deliver electrical energy for operating the vehicle, for example for lighting the vehicle, and may thus operate on typically 12 or 24 V DC.

According to a preferred implementation the method comprises the steps of:
Measuring the charging voltage dropping over the at least one supercapacitor, in particular over a stack of supercapacitors connected in series, dropping over the limiting element and/or of the vehicle battery,
Measuring the charging current flowing through the at least one supercapacitor, and
Pulse width modulating the switch based on the measured charging voltage and the measured charging current.

Such way, when measuring the charging voltage dropping over the at least one supercapacitor and of the vehicle battery, as the limiting element and the at least one supercapacitor are connected in series to the vehicle battery, charging voltage dropping over the limiting element can be calculated from said measured charging voltages. Based on the measured charging voltage and the measured charging current the root mean square of said measurements can be calculated and subsequently kept constant by adjusting at least one duty cycle of the pulse width modulation. The stack of supercapacitors connected in series may comprise 2, 3, 4 or more supercapacitors connected in series, whereby optionally additional supercapacitors can be connected in parallel. The calculation can be carried out by means of a microprocessor or the like.

In another preferred implementation the method comprises the steps of:
Measuring only the charging voltage dropping over the at least one supercapacitor and/or of the vehicle battery,
Calculating the charging current flowing through the at least one supercapacitor based on the measured charging voltage, and
Pulse width modulating the switch based on the measured charging voltage and the calculated charging current.

With said only one measurement is required respectively one measurement can be left out for achieving a very simple and cost-effective implementation of the proposed method.

According to a further preferred implementation, the method comprising at least two supercapacitors connected in series and comprising the step of:
Balancing the charging voltage over the at least two supercapacitors.

Said balancing helps to ensure that each of the at least two supercapacitors becomes sufficiently charged respectively helps avoiding that an unbalanced charging occurs. Said balancing may comprise the step that each supercapacitor receives the same amount of charging voltage and/or is charged by the charging voltage up to a same level.

The object of the invention is further solved by a system for fast charging at least one supercapacitor of a vehicle door latch, comprising
a vehicle battery,
the vehicle door latch with the at least one supercapacitor, a limiting element and a switch connected in series to the vehicle battery and arranged in the vehicle door latch, and
a pulse width modulation controller configured to pulse width modulate the switch during charging such that a root mean square of a charging current flowing through the at least one supercapacitor multiplied by a charging voltage dropping over the at least one supercapacitor or over the limiting element remains constant.

Arranged in the vehicle door latch means preferably that the least one supercapacitor, the limiting element and the switch connected are arranged within the vehicle door and more preferably are arranged within the vehicle door latch, for example within a enclosure, made for example of metal, plastics or a combination thereof, arranged within the vehicle door latch. Thereby the vehicle door latch may comprise a housing, made for example of metal, plastics or a combination thereof, and wherein which the at least one supercapacitor, the limiting element and the switch are arranged.

In a preferred implementation the vehicle door latch comprises at least two supercapacitors connected in series. In a further preferred implementation three, four, five or more supercapacitors are connected in series, whereby optionally additional supercapacitors can be connected in parallel.

According to another preferred implementation the system comprises a voltage measuring device configured for measuring the charging voltage dropping over the at least one supercapacitor, dropping over the limiting element and/or of the vehicle battery and a current measuring device configured for measuring the charging current flowing through the at least one supercapacitor, whereby the pulse width modulation controller is configured for pulse width modulating the switch based on the measured charging voltage and the measured charging current.

The voltage measuring device and/or the current measuring device can be provided, for example, as any voltmeter respectively as any current meter known from prior art.

In a further preferred implementation the switch is provided as MOSFET, the pulse width modulation controller is provided as microcontroller and/or the limiting element is provided as resistor. A metal-oxide-semiconductor field-effect transistor, MOSFET, MOS-FET, or MOS FET, also known as the metal-oxide-silicon transistor, MOS transistor, or MOS, is a type of insulated-gate field-effect transistor that is fabricated by the controlled oxidation of a semiconductor, typically silicon. A microcontroller, MCU for microcontroller unit, is a small computer on a single metal-oxide-semiconductor, MOS, VLSI integrated circuit, IC, chip. A microcontroller contains one or more CPUs, processor cores, along with memory and programmable input/output peripherals. Alternatively a microprocessor can be used as pulse width modulation controller. A resistor is a passive two-terminal electrical component that implements electrical resistance as a circuit element.

According to another preferred implementation the vehicle door latch comprises a catch and a pawl for a latching of the catch. The pawl can be actuated by a motorized pawl drive and the pawl can be separated from the pawl drive by means of an actuator. The motorized pawl drive can be provided as a drive disc which can be actuated by a motor and can be rotated about a pivot point. The vehicle door latch may be associated to a side door or back door of the vehicle.

Further implementations and advantages of the system are directly and unambiguously derived by the person skilled in the art from the method as described before.

### Brief description of drawings

These and other aspects of the invention will be apparent from and elucidated with reference to the implementation described hereinafter.

In the drawings:

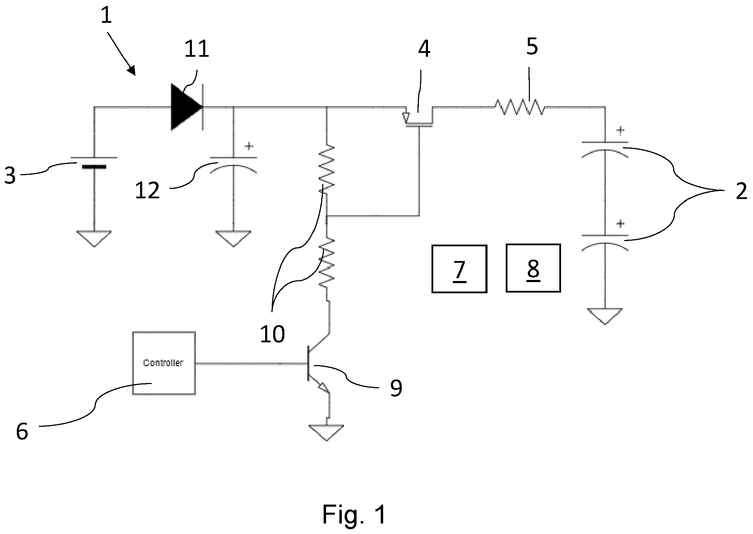

Fig. 1 shows a system for fast charging at least one supercapacitor of a vehicle door latch according to a preferred implementation in a schematic circuit diagram.

### Description of implementations

Fig. 1 shows a system 1 for fast charging at least one supercapacitor 2 of a vehicle door latch, not depicted, according to a preferred implementation in a schematic circuit diagram.

The system 1 further comprises a vehicle battery 3 having a voltage of 12 V. The vehicle battery 3 is connected via a switch 4, which is provided as MOSFET, to a limiting element 5, which is provided as resistor, and subsequently to the at least one supercapacitor 2. As can be seen from Fig. 1, two supercapacitors 2 are connected in series via the limiting element 5 and the switch 4 to the vehicle battery 3. The two supercapacitors 2 and the limiting element 5 such wise form an RC circuit.

The system 1 further comprises a pulse width modulation controller 6, which is provided as microcontroller. The pulse width modulation controller 6 pulse width modulates respectively switches the switch 4 during charging such that a root mean square of a charging current flowing through the two supercapacitors 2 multiplied by a charging voltage dropping over the two supercapacitors 2 or over the limiting element 5 remains constant.

The pulse width modulation controller 6 is connected to a gate of a second switch 9, which is provided as transistors. While an emitter of the second switch 9 is connected to ground, a collector of the second switch 9 is connected via two resistors 10 connected in series via an intermediate point to a positive pole of the vehicle battery 3 and a source of the switch 4. A drain of the switch 4 is connected to the limiting element 5. A gate of the switch 4 is connected to the intermediate point. The resistor 10 connected to the switch 4 has a resistance of 4,7 kΩ, while the resistor 10 connected to the second switch 7 has a resistance of 10 kΩ.

The vehicle battery 3 is connected via a Schottky diode 11 to the source of the switch 4. A capacitor 12 having a capacitance of 100 µF is connected with its positive pole to a cathode of the diode 11 and the source of the switch 4. A negative pole of the capacitor 12 is connected to ground. Negative poles of the vehicle battery 3 and the supercapacitor 2 not connected to the limiting element 5 are connected to ground as well.

Therefore, the system 1 comprises a voltage measuring device 7, which measure the charging voltage dropping over the two supercapacitors 2 and over the vehicle battery 3. Based on said measurements the charging voltage dropping over the limiting element 5 is calculated, for example by the pulse width modulation controller 6. Further the charging current flowing through the two supercapacitors 2 is calculated based on the measured charging voltage. The switch 4 is then pulse width modulated based on the measured charging voltage and the calculated charging current.

Alternatively, a current measuring device 8 can be used for measuring the charging current flowing through the two supercapacitors 2 so that the pulse width modulation controller 6 pulse width modulates the switch 4 based on the measured charging voltage and the measured charging current.

While the invention has been illustrated and described in detail in the drawings and foregoing description, such illustration and description are to be considered illustrative or exemplary and not restrictive; the invention is not limited to the dis-closed implementations. Other variations to be disclosed implementations can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting scope.

### Reference signs list

- 1: system
- 2: supercapacitor
- 3: vehicle battery
- 4: switch
- 5: limiting element
- 6: pulse width modulation controller
- 7: voltage measuring device
- 8: current measuring device
- 9: second switch
- 10: resistor
- 11: diode
- 12: capacitor

## Claims

1. Method for fast charging at least one supercapacitor (2) of a vehicle door latch, whereby the at least one supercapacitor (2) is connected to a vehicle battery (3) via a limiting element (5) and a switch (4) connected in series, comprising the step of:
Pulse width modulating the switch (4) during charging such that a root mean square of a charging current flowing through the at least one supercapacitor (2) multiplied by a charging voltage dropping over the at least one supercapacitor (2) or over the limiting element (5) remains constant.

2. Method according to the previous claim, comprising the steps of:
Measuring the charging voltage dropping over the at least one supercapacitor (2), dropping over the limiting element (5) and/or of the vehicle battery (3),
Measuring the charging current flowing through the at least one supercapacitor (2), and
Pulse width modulating the switch (4) based on the measured charging voltage and the measured charging current.

3. Method according to claim 1, comprising the steps of:
Measuring only the charging voltage dropping over the at least one supercapacitor (2) and/or of the vehicle battery (3),
Calculating the charging current flowing through the at least one supercapacitor (2) based on the measured charging voltage, and
Pulse width modulating the switch (4) based on the measured charging voltage and the calculated charging current.

4. Method according to any of the previous claims, comprising at least two supercapacitors (2) connected in series and comprising the step of:
Balancing the charging voltage over the at least two supercapacitors (2).

5. System (1) for fast charging at least one supercapacitor (2) of a vehicle door latch, comprising
a vehicle battery (3),
the vehicle door latch with the at least one supercapacitor (2), a limiting element (5) and a switch (4) connected in series to the vehicle battery (3) and arranged in the vehicle door latch, and
a pulse width modulation controller (6) configured to pulse width modulate the switch (4) during charging such that a root mean square of a charging current flowing through the at least one supercapacitor (2) multiplied by a charging voltage dropping over the at least one supercapacitor (2) or over the limiting element (5) remains constant.

6. System (1) according to the previous system claim, comprising at least two supercapacitors (2) connected in series.

7. System (1) according to any of the previous system claims, comprising a voltage measuring device (7) configured for measuring the charging voltage dropping over the at least one supercapacitor (2), dropping over the limiting element (5) and/or of the vehicle battery (3) and a current measuring device (8) configured for measuring the charging current flowing through the at least one supercapacitor (2), whereby the pulse width modulation controller (6) is configured for pulse width modulating the switch (4) based on the measured charging voltage and the measured charging current.

8. System (1) according to any of the previous system claims, whereby the switch (4) is provided as MOSFET, the pulse width modulation controller (6) is provided as microcontroller and/or the limiting element (5) is provided as resistor.

9. System (1) according to any of the previous system claims, whereby the vehicle door latch comprises a catch and a pawl for a latching of the catch.
